# EUROPEAN PATENT APPLICATION

(11) **EP 2 469 676 A1**
(43) Date of publication of application: **27.06.2012**
(21) Application number: 10799794.2
(22) Date of filing: 09.07.2010
(51) Int. Cl.: H02J 3/00, G06Q 50/00

(54) **DEMAND-PREDICTION DEVICE, PROGRAM, AND RECORDING MEDIUM**

(30) Priority: 14.07.2009 JP 2009165934
(71) Applicant: Kabushiki Kaisha Toshiba, Minato-ku Tokyo 105-8001 (JP)
(72) Inventor: MURAKAMI, Yoshiki, Minato-ku Tokyo 105-8001 (JP); KOBAYASHI, Takenori, Minato-ku Tokyo 105-8001 (JP); HIROMASA, Katsutoshi, Minato-ku Tokyo 105-8001 (JP); FUJIMOTO, Yuji, Minato-ku Tokyo 105-8001 (JP); AOKI, Shinichi, Minato-ku Tokyo 105-8001 (JP); SATO, Hiroaki, Minato-ku Tokyo 105-8001 (JP)
(74) Representative: Henkel, Breuer & Partner
(86) International application number: PCT/JP2010/061718
(87) International publication number: WO 2011/007736

(57) **Abstract**

Provided with an input device (3) that, when the demand for a plurality of time periods in one day is predicted in the prediction of demand in future time sequence data, inputs as a portion of the input data for the demand prediction of a demand prediction time period the input data for the demand prediction of the aforementioned demand prediction time period and prediction results of the demand of a prescribed time period that is before the aforementioned demand prediction time period; and a demand-prediction calculation unit (5) that calculates the prediction value of the demand in the aforementioned demand prediction time period using input results from the aforementioned input device.

## Description

### Technical Field

Embodiments of the present invention relate to a demand prediction apparatus, a program, and a recording medium for predicting demand of electric power, gas, heat, water, and the like.

### Background Art

It is important to predict future energy demands, such as electric power demand, gas demand, and heat demand, water demand, and other product demands, when power generation plans, supply plans, or sales plans are made.

In particular, it is extremely important to predict the peak demand of electric power for the next day in order to determine power generators to be activated. For this reason, the peak demand of electric power is predicted using regression analysis and the like based on the history of the demand of electric power in the past, predicted values of the highest temperatures for the next day, and the like.

Not only the peak demand of electric power but also the rise in the demand of electric power in the morning and fall in the demand of electric power during lunchtime are also important in making operation plans for power generators. For this reason, it is necessary to predict time-series data, i.e., change in the amount of the demand of electric power in a day, e.g., time-series data constituted of twenty four points, one taken every hour.

For example, a total electric power demand amount prediction apparatus disclosed in Jpn. Pat. Appln. KOKAI Publication No. 5-18995 is a technique in the field of prediction of such time-series data. This apparatus predicts the total amount of demand of electric power in the future from electric power demand data in the past and data of temperature and humidity. This apparatus predicts the total amount of the demand of electric power in a day, and corrects the error using a method such as a neural network. More specifically, when there is a particular tendency in the error, e.g., when there is a great change in the temperature, the error is found and corrected by a method such as a neural network.

A demand prediction apparatus as disclosed in Jpn. Pat. Appln. KOKAI Publication No. 2007-47996 is another example of a technique in the field of prediction of the time-series data explained above. This apparatus predicts the demand of electric power every hour in a certain period in the future on the basis of climate information. For example, a regression model is used as a prediction model. The input data includes the latest history of demand available at that moment. In addition, this apparatus constantly corrects prediction values in real time using the most recent climate data in order to improve the accuracy of the prediction.

As described above, in the conventional technique, particular prediction models are used in both of the prediction of the maximum demand and the prediction of the demand at every hour, and the prediction models of each hour and each day are independent of each other. As regards the actual electrical power demand at each hour in a day, a relationship exists. More specifically, when the demand of electric power in the morning increases due to some reason, the peak demand of electric power at noon also tends to increase. For example, when the temperature in the morning is high in the summer, the demand of electric power in the morning increases because of air conditioning, and even if the temperature decreases at noon, the demand of electric power may be kept at a high level. In such case, when the prediction is made in each hour independently, the history in the past cannot be taken into consideration. In this case, there is a problem in that the error increases between the actual demand and the prediction result of the demand of electric power.

There is a method for prediction using a demand curve of a day as a pattern. For example, a typical technique uses a neural network as described in Jpn. Pat. Appln. KOKAI Publication No. 10-80062. In this technique, demand prediction values at respective hours can be obtained at the same time as output data. Therefore, the relationship between the demands at respective hours is inherent to the prediction mode. In this apparatus, in order to obtain only the relationship between a certain hour and another particular hour and determine a causal relationship between the demands at these hours, it is necessary to separately generate a prediction model therefor.

For example, as disclosed in Jpn. Pat. Appln. KOKAI Publication No. 2005-56103, a technique for taking a relationship between hours into consideration by another method includes a method for averaging and using climate data in the past in order to predict a demand while taking continuity into consideration with an interval in unit time. Accordingly, a time lag of change in the demand due to a room temperature changing with a time lag with respect to an outdoor temperature is taken into consideration. However, this method is based on a specific consideration about reasons of effects exerted on the demand, and therefore, a formulation cannot be necessarily made at all times.

### Disclosure of Invention

### Technical Problem

As described above, in the conventional technique, when time-series data such as the demand of electric power are predicted with, e.g., twenty four points taken every hour, consideration of a correlation between respective hours requires a special formula or use of a neural network for outputting twenty four points.

However, in the special formulation explained above, physical phenomena such as temperature can be formulated, but a correlation between respective hours cannot be taken into consideration when the demand changes due to an unknown reason. On the other hand, when the neural network is used, there is a problem in that it is difficult to interpret the relationship between input and output of the neural network.

When the prediction is made with twenty four points, it is necessary to prepare input data for the respective hours, which greatly increases the input data as compared with the prediction of only the peak demand, but in practice, it is difficult to prepare these data. As mentioned above, when the prediction is made with twenty four points, the computation time simply increases twenty four times as compared with a prediction with one point, but if the relationship between respective hours is taken into consideration, the input data further increase. Therefore, when neural network is used for prediction, the computation time is much longer than twenty four times as compared with the prediction made with only one point.

### Solution to Problem

According to an embodiment, an input device configured to input input data for prediction of a demand at a demand prediction target time and a prediction result of a demand at a predetermined time before the demand prediction target time as a portion of input data for prediction of the demand at the demand prediction target time when demands at a plurality of times in a day are predicted in prediction of time-series data of a demand in a future and a demand prediction operation processing unit configured to calculate a prediction value of the demand at the demand prediction target time using an input result given with the input device are provided.

### BRIEF DESCRIPTION OF DRAWINGS

FIG. 1 is a figure illustrating an example of a conventional prediction method for predicting an electric power demand on the basis of the maximum demand and the minimum demand of the electric power;
FIG. 2 is a figure illustrating an example of a conventional prediction method for predicting electric power for each hour of twenty four hours;
FIG. 3 is a figure illustrating an example of a relationship between an error and a conventional prediction result of electric power demand;
FIG. 4 is a figure illustrating a conventional prediction result of demand of electric power and a history of demand up to the current time on the day of the prediction target day;
FIG. 5 is a figure illustrating a first example showing a conventional method for predicting the demand of electric power;
FIG. 6 is a figure illustrating a second example showing a conventional method for predicting the demand of electric power;
FIG. 7 is a figure illustrating a first example showing a method for predicting the demand of electric power for twenty four hours with an energy demand prediction apparatus according to an embodiment;
FIG. 8 is a figure illustrating a second example showing a method for predicting the demand of electric power for twenty four hours with the energy demand prediction apparatus according to the embodiment;
FIG. 9 is a figure illustrating an example of a functional configuration of a conventional energy demand prediction apparatus;
FIG. 10 is a figure illustrating an example of a functional configuration of the energy demand prediction apparatus according to the embodiment;
FIG. 11 is a figure illustrating a first example of correlation of demand of electric power at different times;
FIG. 12 is a figure illustrating a second example of correlation of demand of electrical power at different times;
FIG. 13 is a block diagram illustrating an example of configuration of the energy demand prediction apparatus according to the embodiment;
FIG. 14 is a flowchart illustrating an example of a processing operation performed by the energy demand prediction apparatus according to the embodiment; and
FIG. 15 is a figure showing, in a table format, a relationship between the type of input data and the type of model used in various modes in the energy demand prediction apparatus according to the embodiment.

### Best Mode for Carrying Out the Invention

An embodiment will be hereinafter described with reference to drawings.

In the present embodiment, for example, demand prediction of time-series data concerning electric power is explained. However, the present embodiment can also be applied to demand prediction of other types of energy, such as gas and heat, or prediction of demands other than energy, such as sales demand prediction of, e.g., water and other merchandize.

Whether it is necessary to predict a demand value at several points of time in a day differs according to the purpose of prediction. Moreover, the methodology, way of thinking, computation operation, and the like are also greatly different. Ultimately, a demand estimation value at every hour is required. In some cases, demand estimation values are required with a shorter interval of time. Usually, the following method is employed. Prediction is made with two points to several points, such as the maximum demand value and the minimum demand value, and based on the prediction result, a day having a similar tendency in the load curve representing the demand of electric power in the past is selected. Based on the load curve representing the demand of electric power on this day, a load curve of the electric power demand is estimated for one day for which the demand of electric power is to be predicted. In recent years, the necessity of prediction with a shorter time interval is increasing, and accordingly, a method for making prediction with twenty four points taken every hour in the prediction target day is now being considered.

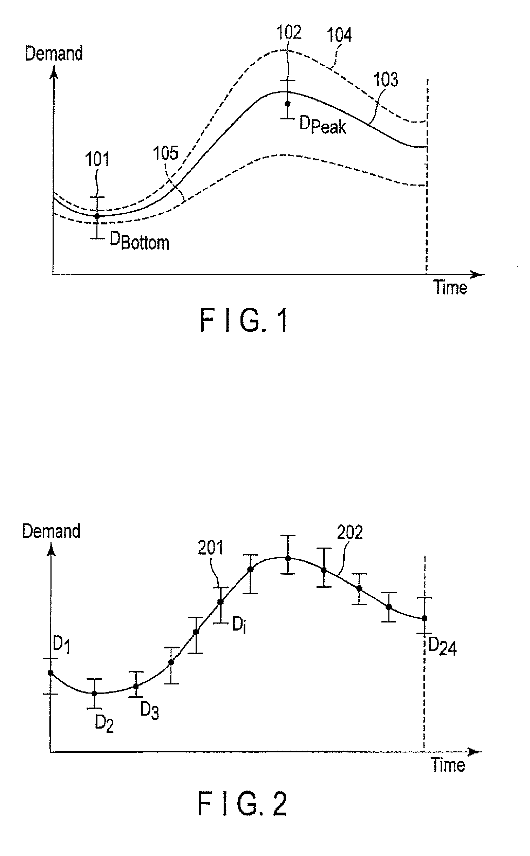

FIG. 1 is a figure illustrating an example of a conventional prediction method for predicting an electric power demand on the basis of the maximum demand and the minimum demand of the electric power.

The horizontal axis shown in FIG. 1 denotes time. In FIG. 1, the left end of the horizontal axis is 0 a.m., and the right end thereof is 24 o'clock. This is also applicable to the horizontal axes in subsequent figures. In the case of FIG. 1, first, a demand prediction apparatus predicts a minimum demand prediction value 101 (D_{bottom}) and a maximum demand prediction value 102 (Dₚₑₐₖ) of electric power of an electric power demand prediction target day. Then, the demand prediction apparatus collates load curves 103, 104, 105, and the like of the electric power demand for one day in the past with various kinds of demand prediction values explained above, and selects the most applicable load curve 103 from the load curves 103, 104, 105, and the like, thus predicting an electric power demand for twenty four hours, i.e., one day, of the electric power demand prediction target day.

In this case, two demand values are predicted, and it is easy to predict them, but it is impossible to predict the details of the load curve of the electric power demand of the electric power demand prediction target day. It should be noted that I-shaped marks in the minimum demand prediction value 101 and the maximum demand prediction value 102 in FIG. 1 represent the ranges of errors.

FIG. 2 is a figure illustrating an example of a conventional prediction method for predicting electric power for each hour of twenty four hours.

In the example as shown in FIG. 2, the demand prediction apparatus respectively predicts electric power demand values 201 at twenty four points, i.e., each hour in the electric power demand prediction target day, and ultimately obtains a load curve 202 representing the electric power demand on the basis of these values. In this method, when the accuracy of the prediction model at each hour is high, the load curve can be predicted in detail. However, since it is necessary to make prediction at the twenty four points, input data are needed at the hours corresponding to the twenty four points, which makes the computation cumbersome. Naturally, the prediction values at the respective hours have errors with respect to the actual demand values, and therefore there is a problem in that it is difficult to consider the overall error.

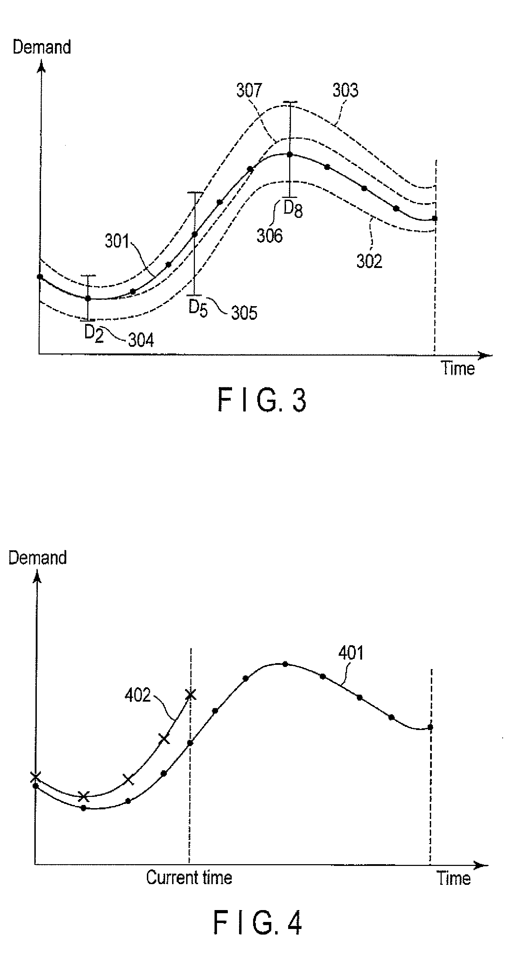

FIG. 3 is a figure illustrating an example of a relationship between an error and a conventional prediction result of electric power demand.

In the example as shown in FIG. 3, even if a load curve 301 of the demand of electric power of the electric power demand prediction target day can be predicted from the prediction result of each hour, the load curve 302 and the load curve 303 representing the actual demand of electric power are usually displaced from the predicted load curve 301. The load curve 301 may be considered as an average load curve of that season.

In general, as shown by the actual load curve 302 of the first electric power demand prediction target day in FIG. 3, when the actual demand of electric power in the morning is less than the prediction value (average value), the value of the actual demand of electric power may continue to be less than the prediction value at noon, too. As shown by the actual load curve 303 of the second electric power demand prediction target day in FIG. 3, when the actual demand of electric power in the morning is more than the prediction value (average value), the value of the actual demand of electric power may continue to be more than the prediction value at noon, too.

In this case, for example, a demand prediction value 304 (D₂) at "time 2", a demand prediction value 305 (D₅) at "time 5", and a demand prediction value 306 (D₈) at "time 8" as shown in FIG. 3 are related to each other. Therefore, when the demand of electric power at each hour is predicted, it is important to consider the relationships therebetween.

In some cases, as shown by the actual load curve 307 of the third electric power demand prediction target day in FIG. 3, the actual value of the demand of electric power in the morning may be less than the prediction value, and the actual value of the demand of electric power may be more than the prediction value in the afternoon.

Even in such case, however, as shown in FIG. 3, in a short time, there is usually such a relationship that when a demand prediction value D₂ is more than an electric power demand value at the same time on the load curve 307, a demand prediction value D₅ is also more than an electric power demand value at the same time on the load curve 307. On the other hand, there may be a case where when the demand prediction value D₂ is more than the electric power demand value at the same time on the load curve 307, a demand prediction value D₈ is less than an electric power demand value at the same time on the load curve 307. Therefore, when this kind of relationship is incorporated into the prediction model, the prediction accuracy can be improved.

FIG. 4 is a figure illustrating a conventional prediction result of demand of electric power and a history of demand up to the current time on the day of the prediction target day.

In the example as shown in FIG. 4, load curves are shown when the history of demand of electric power up to the current time on the day of the prediction target day is obtained. The load curve 401 as shown in FIG. 4 is a prediction result obtained in a day before the electric power demand prediction target day, and it is assumed that, when it is the day of the prediction target day, the actual demand of electric power changes as shown in the load curve 402 from the morning to the current time on the day of the prediction target day.

In this case, it is necessary to correct the prediction result shown by the load curve 401 after the current time of the day of the prediction target day. This correction is called same-day correction. In the same-day correction, it is natural to use electric power demand value data immediately before the current time, but there are the following difficulties in how to predict the demand of electric power in the near future on the basis of the electric power demand value data immediately before the current time.

If the demand is independently predicted at each hour in the prediction of the day before the prediction target day, it is necessary to have data such as temperatures in the future in order to predict the demands in the future. The prediction values of the temperatures in the future are not disclosed at each hour, and when the temperature data in the future are not obtained, the demand prediction values become the same result as the prediction result produced in the previous day. Therefore, when the load curve simply moves in parallel, or when the temperature in the morning is higher by one degree, correction is made based on the experience of an expert, e.g., how much the demand of electric power at noon increases from the morning.

In order to enhance the accuracy of the prediction further, data in the past can be sorted and statistically processed according to seasons and hours, but this processing is cumbersome, and is not suitable for detailed prediction, e.g., prediction for each hour.

Another method includes prediction of a temperature in the future. In practice, electric power suppliers actually predict temperatures several hours ahead from temperature data in the past. However, this is a technique concerning the climate prediction, and the accuracy in the prediction of the demand of electric power relies on this accuracy in the prediction of the temperature.

This difficulty also arises when a neural network is used to predict the demand of electric power for twenty four hours. In particular, when a neural network is used to predict the demand of electric power for twenty four hours at the same time, it is difficult to predict the demand of electric power at a certain hour of the day with the neural network.

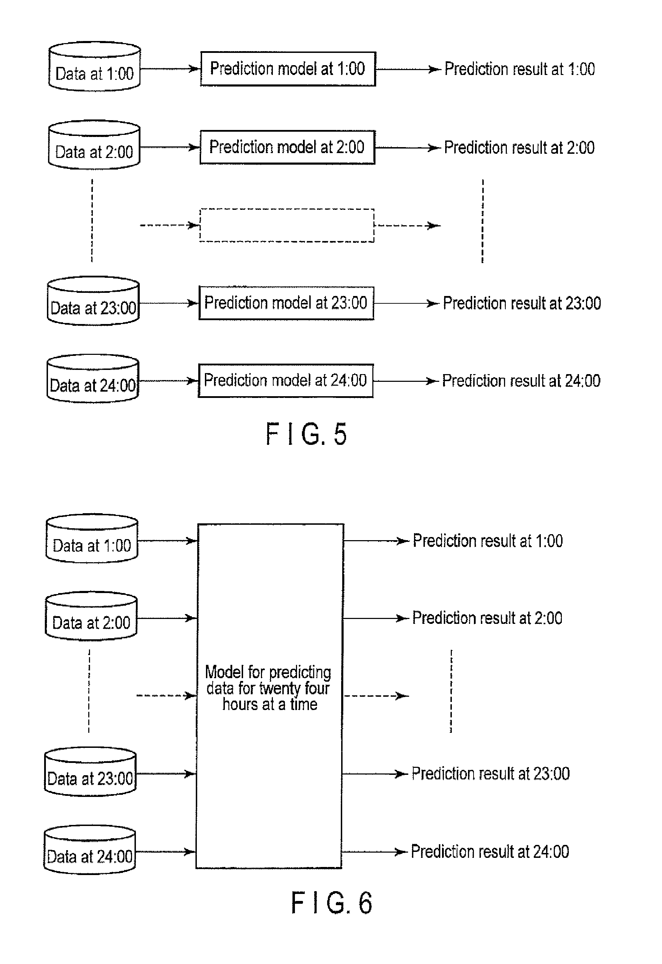

FIG. 5 is a figure illustrating a first example showing a conventional method for predicting the demand of electric power. FIG. 6 is a figure illustrating a second example showing a conventional method for predicting the demand of electric power.

In the above methods, it is usual to independently predict the demand of electric power at each hour, or predict the electric power demand values of all of the hours at a time, and there is no particular limitation concerning the order in which the prediction is made. Even when the correlation between the hours is taken into consideration, the input data as shown in FIG. 5, e.g., temperatures in the future, are predicted.

The prediction model as shown in FIG. 5 is expressed as the following numerical expressions.
D₁=f₂ (temperature at time 1, humidity at time 1, weather at time 1, ...)
D₂=f₂ (temperature at time 2, humidity at time 2, weather at time 2, ...)
...
D₂₃=f₂₃ (temperature at time 23, humidity at time 23, weather at time 23, ...)
D₂₄=f₂₄ (temperature at time 24, humidity at time 24, weather at time 24, ...)

In this case, Dᵢ (i=1 to 24) denotes a prediction result of demand at a time i, and fᵢ (i=1 to 24) denotes a prediction model of electric power demand value at the time i.

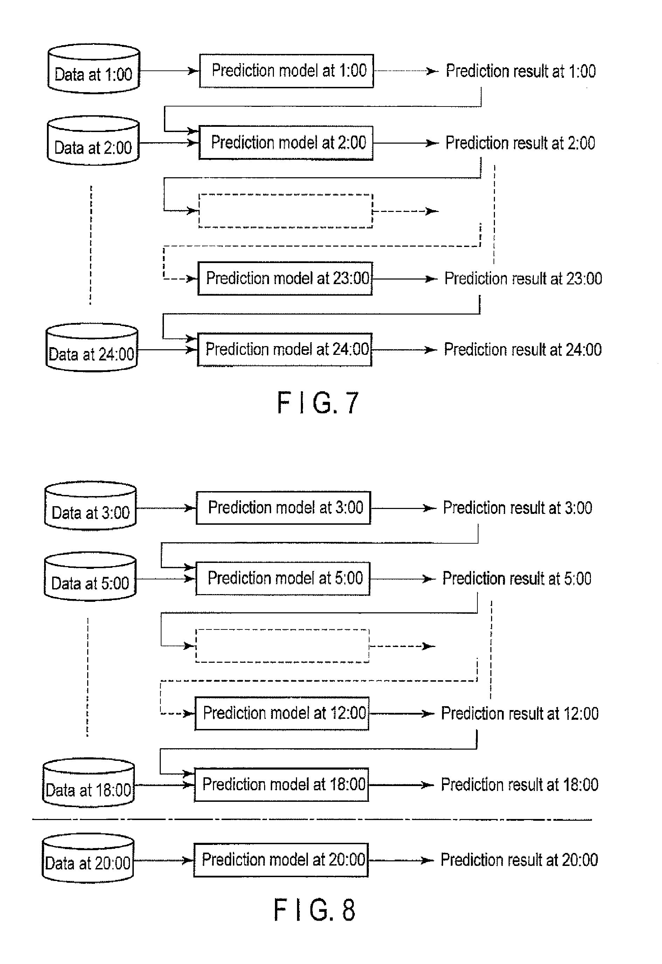

FIG. 7 is a figure illustrating a first example showing a method for predicting the demand of electric power for twenty four hours with an energy demand prediction apparatus according to an embodiment.

FIG. 8 is a figure illustrating a second example showing a method for predicting the demand of electric power for twenty four hours with the energy demand prediction apparatus according to the embodiment.

Basically, the energy demand prediction apparatus successively predicts the electric power demand value for each hour.

In the example as shown in FIG. 7, the energy demand prediction apparatus uses twenty four prediction models in order to predict the electric power demand values for twenty four hours. Each prediction model uses, as input data, a prediction result of demand of electric power one hour before the prediction target time of the model in question. For example, the following expressions represent a case where a prediction result of demand one hour ago is adopted as an input of the prediction model.
D₁=f₁ (temperature at time 1, humidity at time 1, ..., demand prediction result at time 24 of previous day)
D₂=f₂(temperature at time 2, humidity at time 2, ..., demand prediction result at time 1)
...
D₂₃=f₂₃ (temperature at time 23, humidity at time 23, ..., demand prediction result at time 22)
D₂₄=f₂₄ (temperature at time 24, humidity at time 24, ..., demand prediction result at time 23)

In this case, Dᵢ (i=1 to 24) denotes a prediction result of an electric power demand value at a time i, and fᵢ (i=1 to 24) denotes a prediction model of the electric power demand value at the time i.

When prediction results of the demand of electric power before the prediction target time are adopted as input data, it is not necessary to use data one hour before the prediction target time in the prediction model. In the example as shown in FIG. 8, in the prediction model, a prediction result of an electric power demand value at three o'clock, i.e., two hours earlier than five o'clock, is used for prediction of an electric power demand value at five o'clock, and a prediction result of an electric power demand value at twelve o'clock, i.e., six hours earlier than eighteen o'clock, is used for prediction of an electric power demand value at eighteen o'clock as input data. In the example as shown in FIG. 8, in the prediction model, data of electric power demand values before twenty o'clock are not used for prediction of an electric power demand value at twenty o'clock as input data.

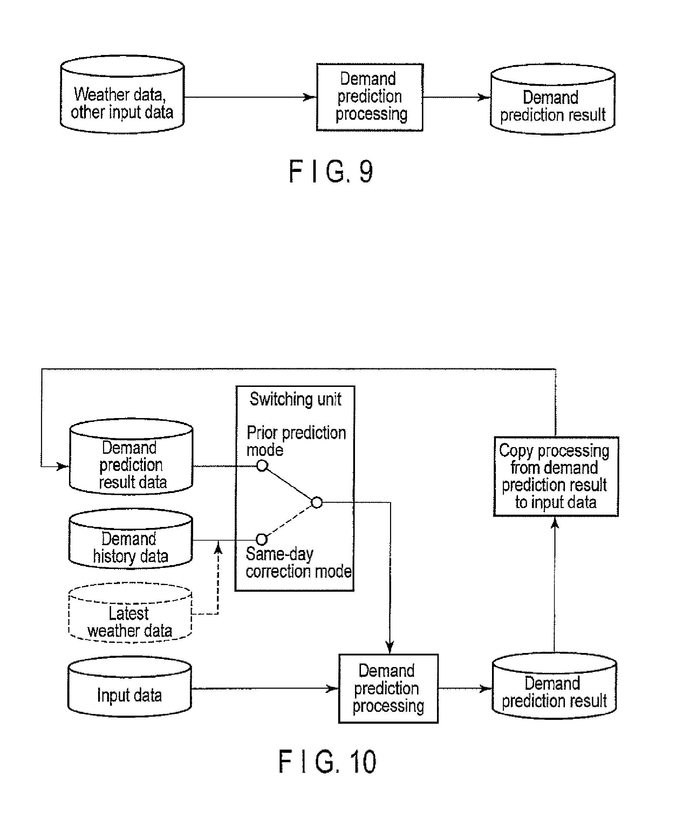

FIG. 9 is a figure illustrating an example of a functional configuration of a conventional energy demand prediction apparatus. FIG. 10 is a figure illustrating an example of a functional configuration of the energy demand prediction apparatus according to the embodiment.

As shown in FIG. 9, the conventional energy demand prediction apparatus uses weather data and other data as input data, and obtains a demand prediction result by performing demand prediction processing on the basis of the input data.

On the other hand, as shown in FIG. 10, the energy demand prediction apparatus according to the embodiment can switch a mode for demand prediction to either a prior prediction mode or a same-day correction mode using a switching unit.

When the mode is the prior prediction mode, the energy demand prediction apparatus uses, as input data, demand prediction result data and weather prediction values before the prediction target time, performs demand prediction processing on the basis of the prediction model corresponding to the prediction target time and the input data, copies the demand prediction result, and re-uses the demand prediction result as input data for demand prediction at a subsequent prediction target time.

When the mode is the same-day correction mode, the energy demand prediction apparatus performs demand prediction processing using, as input data, demand history data, e.g., from the morning to a predetermined time before the prediction target time on the day of the prediction target day, instead of the demand prediction result data at a time before the prediction target time.

In this case, in the demand prediction at the same prediction target time, the input data are different between the modes, i.e., the prior prediction mode and the same-day correction mode, but the same prediction model can be used in both of the modes, i.e., the prior prediction mode and the same-day correction mode.

As the re-used data, data at a time having the highest degree of correlation may be used, or data at a time having a relatively low degree of correlation may be used.

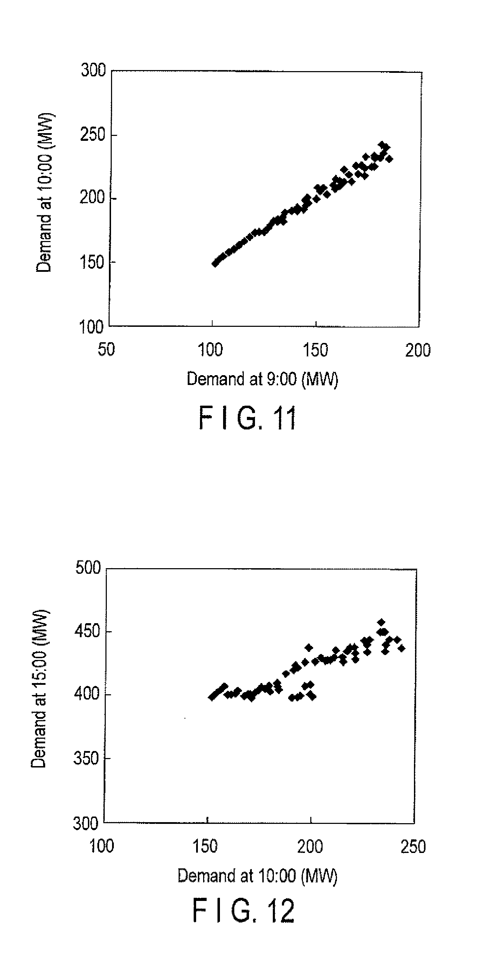

FIG. 11 is a figure illustrating a first example of correlation of demand of electric power at different times. FIG. 12 is a figure illustrating a second example of correlation of demand of electrical power at different times.

FIG. 11 shows a relationship between the amount of the demand of electric power at nine o'clock and the amount of the demand of electric power at ten o'clock. FIG. 12 shows relationship between the amount of the demand of electric power at ten o'clock and the amount of the demand of electric power at fifteen.

As shown in FIG. 11, there is a very high degree of correlation between the demand of electric power at a certain time and the demand of electric power one hour before the certain time. Therefore, it is effective to use the demand prediction value one hour before the prediction target time as the input data for prediction of the demand of electric power at the prediction target time. However, since it often takes several hours to prepare to activate a power generator, it is impossible to make use of the prediction for the operation even when the demand of electric power at the prediction target time is predicted on the basis of the demand prediction value one hour before the prediction target time. Therefore, in many cases, the demand of electric power at a certain prediction target time is predicted several hours before the prediction target time or more than several hours before the prediction target time.

As described above, it is difficult to use a historical value of the demand of electric power one hour before the prediction target time as the input data for prediction of the demand of electric power at the prediction target time. However, the energy demand prediction apparatus can use a prediction value of the demand of electric power at the same time, i.e., one hour before the prediction target time as the input data for prediction of the demand of electric power at the prediction target time. On the other hand, if the activation performance of the power generator is extremely high, and the power generator can be activated within an hour, prediction may be made one hour before the prediction target time. In this case, the energy demand prediction apparatus can use the history value of the demand of electric power one hour before the prediction target time as the input data, instead of the prediction value of the demand of electric power one hour before the prediction target time.

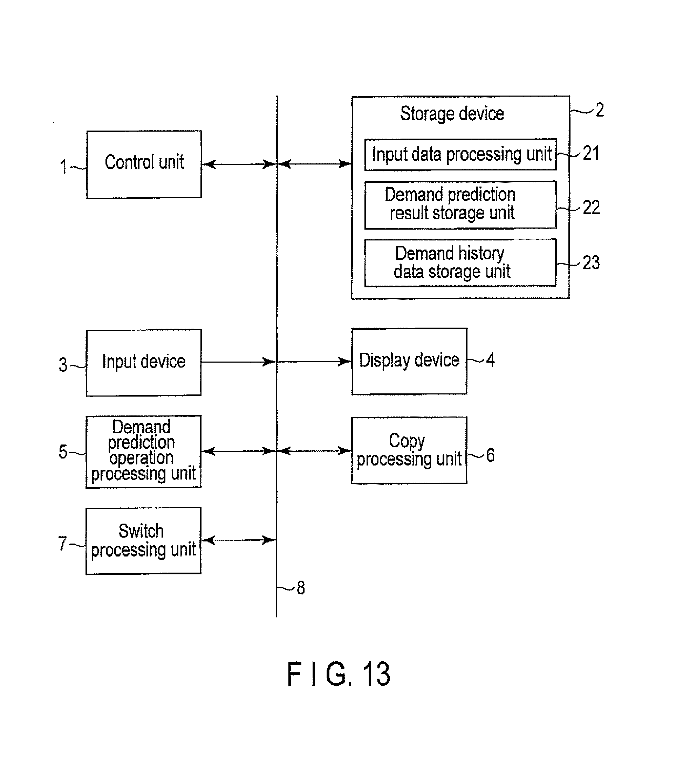

FIG. 13 is a block diagram illustrating an example of configuration of the energy demand prediction apparatus according to the embodiment.

As shown in FIG. 13, the energy demand prediction apparatus according to the embodiment includes a control unit 1 controlling processing of the entire apparatus, a storage device 2, an input device 3 such as a keyboard and a mouse, a display device 4 such as a liquid crystal display, a demand prediction operation processing unit 5, a copy processing unit 6, and a switch processing unit 7, which are connected with each other via a bus 8.

The storage device 2 is, for example, a storage medium such as a nonvolatile memory. The storage device 2 stores programs for operational processing carried out by the demand prediction operation processing unit 5, the copy processing unit 6, and the switch processing unit 7, and stores data of a prediction model corresponding to a predetermined time of a predetermined date. In addition, the storage device 2 includes an input data storage unit 21, a demand prediction result storage unit 22, and a demand history data storage unit 23. The prediction model may be a prediction operational expression for a prediction operational expression for regression analysis, or may be a neural network.

The demand prediction operation processing unit 5 uses a predetermined prediction model corresponding to a prediction target time, i.e., prediction model stored in the storage device 2 and input data such as a temperature prediction value and a humidity prediction value at the prediction target time, and predicts the electric power demand value at the prediction target time.

The input data storage unit 21 of the storage device 2 stores input data for prediction of the demand of electric power such as weather prediction value, e.g., temperature and humidity at each hour of each date.

The demand prediction result storage unit 22 of the storage device 2 stores a prediction result of the demand of electric power at a predetermined time of each date provided by the demand prediction operation processing unit 5.

The demand history data storage unit 23 of the storage device 2 stores an actual electric power demand value at a predetermined time of each date from the past to the present.

The copy processing unit 6 has a function of copying the prediction value of the demand of electric power at a certain prediction target time as input data for prediction of demand of electric power at a different prediction target time after the certain prediction target time.

The switch processing unit 7 has a switching function for switching the mode concerning the demand of electric power at the prediction target time to either the prior prediction mode or the same-day correction mode.

The prior prediction mode is a mode for predicting the demand at a demand prediction target time before the previous day of a demand prediction target day to which the demand prediction target time belongs. The same-day correction mode is a mode for correcting the demand prediction value at the demand prediction target time obtained in the prior prediction mode using the latest weather data and the like at the same prediction target time that can be obtained on the day of the demand prediction target day to which the demand prediction target time belongs. These modes can be changed when a user performs a predetermined operation with the input device 3.

The energy demand prediction apparatus can be achieved with a hardware configuration or a combination of a hardware configuration and software configuration. In the latter case, the software configuration achieves each function of the energy demand prediction apparatus when a program previously obtained from a network or a computer-readable storage medium is installed on a computer.

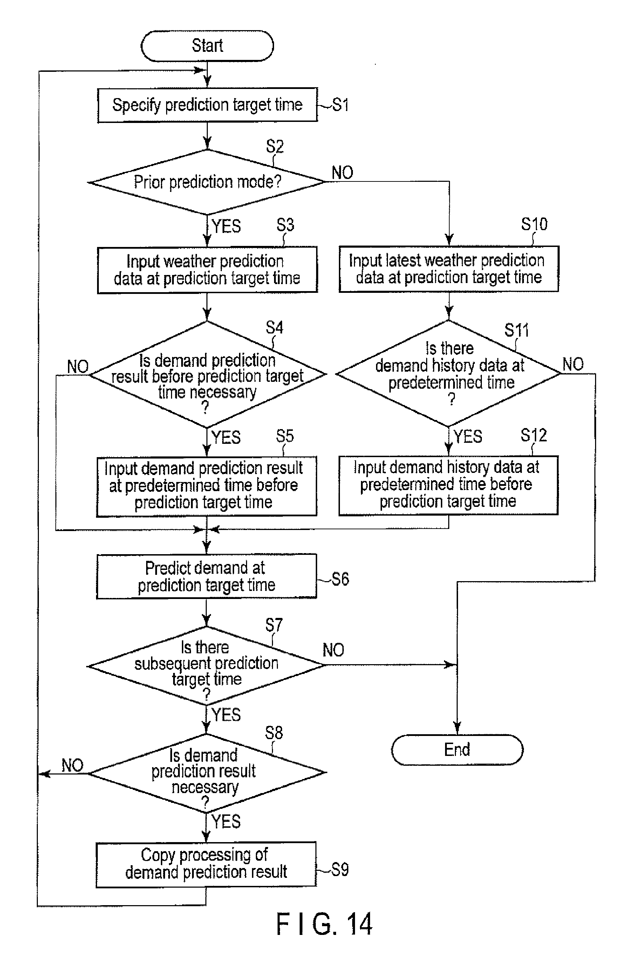

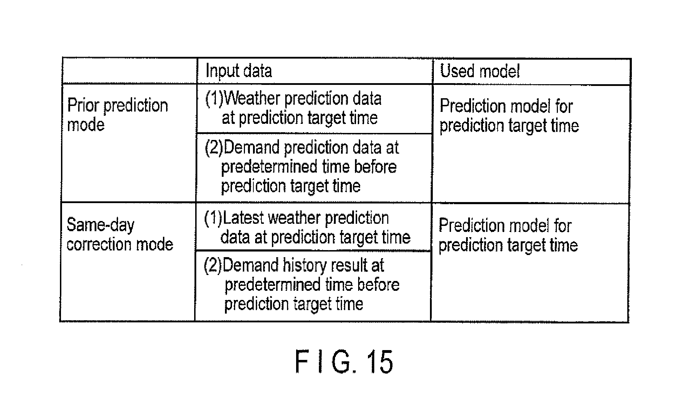

Subsequently, operation of the energy demand prediction apparatus having the configuration as shown in FIG. 13 will be explained. FIG. 14 is a flowchart illustrating an example of a processing operation performed by the energy demand prediction apparatus according to the embodiment. FIG. 15 is a figure showing, in a table format, a relationship between the type of input data and the type of model used in various modes in the energy demand prediction apparatus according to the embodiment. In this case, it is assumed that the latest weather prediction data such as temperature and humidity at each time of each day are read from an external device and stored in the input data storage unit 21 of the storage device 2.

First, the user who uses the input device 3 specifies an electric power demand prediction target day and electric power demand prediction target times of the prediction target day (step S1). In this case, it is assumed that the next day is specified as the electric power demand prediction target day, and a plurality of predetermined times of twenty four hours of the day are specified as electric power demand prediction target times. The plurality of times specified as the demand prediction target times may be times with a predetermined time interval, or may be times respectively specified by a user.

Then, when the current mode is the prior prediction mode (YES of step S2), the demand prediction operation processing unit 5 selects the earliest time of the specified electric power demand prediction target times at which the demand of electric power has not yet predicted, and reads and inputs the weather prediction data at the selected time from the input data storage unit 21 of the storage device 2 (step S3).

Then, the demand prediction operation processing unit 5 reads data of the prediction model at the selected electric power demand prediction target time from the storage device 2. This prediction model includes demand prediction result necessity information indicating whether the prediction result of the demand of electric power is needed or not at a predetermined time before a time corresponding to the prediction model for prediction of an electric power demand value at the time corresponding to the prediction model. The demand prediction operation processing unit 5 looks up this information, thereby determining whether the prediction result of the demand of electric power at the predetermined time before the selected electric power demand prediction target time is necessary or not (step 34).

When the result is determined to be "YES" in the processing in step S4, the demand prediction operation processing unit 5 reads and inputs the prediction result of the demand of electric power at the predetermined time before the selected electric power demand prediction target time from the demand prediction result storage unit 22 of the storage device 2 (step S5).

Then, the demand prediction operation processing unit 5 calculates the prediction value of the demand of electric power at the selected electric power demand prediction target time on the basis of the weather prediction data that are input in the processing of step S3, the prediction result of the demand of electric power that are input in the processing of step S5, and the data of the prediction model corresponding to the selected electric power demand prediction target time (step S6).

When the result is determined to be "NO" in the processing in step S4, the demand prediction operation processing unit 5 omits the processing of step S5 explained above, and calculates the prediction value of the demand of electric power at the selected electric power demand prediction target time on the basis of the weather prediction data that are input in the processing of step S3 and the data of the prediction model corresponding to the selected electric power demand prediction target time (step S4 → step S6).

After the demand prediction operation processing unit 5 calculates the prediction value of the demand of electric power in the processing of step S6, the demand prediction operation processing unit 5 selects a subsequent electric power demand prediction target time when there is the subsequent electric power demand prediction target time, i.e., the demands of electric power at all the specified electric power demand prediction target times have not yet been predicted (YES of step S7).

Then, the demand prediction operation processing unit 5 reads the prediction model corresponding to the selected time from the storage device 2, and looks up the demand prediction result necessity information of the corresponding model, thereby determining whether the prediction result of the demand of electric power at the selected electric power demand prediction target time, i.e., at the predetermined time before the selected electric power demand prediction target time, is necessary or not for prediction of the electric power demand value at the time (step S8).

When the result is determined to be "YES" in the processing in step S8, the copy processing unit 6 copies the prediction value of the demand of electric power calculated in the processing in step S6 to the input data storage unit 21 of the storage device 2 as the input data for prediction of the demand of electric power at the subsequent time (step S9).

After the processing in step S9, or when the result is determined to be "NO" in the processing in step S8, the processing of step S1 and subsequent steps are performed for the subsequent time.

On the other hand, when the current mode is the same-day correction mode (NO in step S2), the demand prediction operation processing unit 5 selects the earliest time of the electric power demand prediction target time of the day at which the same-day correction is not performed on the prediction value of the demand of electric power, and reads and inputs the latest weather prediction data at the selected time from the input data storage unit 21 of the storage device 2 (step S10).

Then, the demand prediction operation processing unit 5 reads the data of the prediction model at the selected electric power demand prediction target time from the storage device 2. The data of the prediction model includes demand history data necessity information indicating whether the history data of the demand of electric power is needed or not at a predetermined time before a time corresponding to the prediction model for prediction of an electric power demand value at the time corresponding to the prediction model. The demand prediction operation processing unit 5 looks up this information, thereby determining whether the history data of the demand of electric power at the predetermined time before the selected electric power demand prediction target time are stored in the demand history data storage unit 23 of the storage device 2 or not (step S11). When the result is determined to be "NO" in the processing in step S11, the processing is terminated.

When the result is determined to be "YES" in the processing in step all, the demand prediction operation processing unit 5 reads and inputs the history data of the demand of electric power at the predetermined time before the selected electric power demand prediction target time indicated by the prediction model read out as explained above, from the demand history data storage unit 23 of the storage device 2 (step S12).

Then, the demand prediction operation processing unit 5 calculates the prediction value of the demand of electric power at the selected electric power demand prediction target time on the basis of the weather prediction data that are input in the processing in step S10, the history data of the demand of electric power at the predetermined time before the selected electric power demand prediction target time that are input in the processing in step S12, and the data of the prediction model at the electric power demand prediction target time (step S12 → step S6). As a result, the same-day correction is performed on the already obtained prediction value of the demand of electric power.

When the result is determined to be "NO" in the processing in step S7, i.e., when the demands of electric power at all the specified electric power demand prediction target times have been predicted, the processing is terminated.

As described above, the energy demand prediction apparatus according to the embodiment calculates the demand prediction value at a certain demand prediction target time on the basis of the input data such as a weather prediction value at the time and the prediction model corresponding to the time. Then, the energy demand prediction apparatus copies the calculated demand prediction result as the input data for calculating the demand prediction value at a demand prediction target time after the time in question, and calculates the demand prediction value at the demand prediction target time after the time in question on the basis of the data, the input data such as the weather prediction value at the demand prediction target time after the time in question, and the prediction model corresponding to the demand prediction target time after the time in question. Therefore, the demand can be appropriately predicted in view of the correlation between the times.

When the energy demand prediction apparatus needs to calculate the demand prediction value at a demand prediction target time of a certain demand prediction target day, and correct the demand prediction value at the day of the demand prediction target day, the energy demand prediction apparatus can correct the demand prediction value on the basis of the demand history data up to a predetermined time before the demand prediction target time concerning the electric power demand value to be corrected. Therefore, the accuracy of the demand prediction can be improved.

The energy demand prediction apparatus according to the embodiment can use conventional prediction models as the prediction models for calculating the demand of electric power at each time without any modification. Therefore, it is not necessary to prepare new prediction models. Moreover, on the day when the correction is made, the energy demand prediction apparatus according to the embodiment can use the same prediction model as the prediction model for prediction performed on or before the previous day. Therefore, the increase of the calculation time caused by the increase of the time taken in the prediction of the demand is significantly reduced, and this allows it to easily predict the demand for twenty four hours or at every given time.

As described above, in the present embodiment, the prediction models can be freely combined, and the prediction model at each time may be the same as shown in FIG. 6 or may be different as shown in FIG. 5.

On the other hand, the input data at a time before a certain prediction target time used for prediction of the demand value at the prediction target time is not limited to the prediction value of the electric power demand value itself but may be a prediction value of a change rate of demand or a function between demand and temperature.

In the prediction model according to the embodiment, the prediction values in the past or the history values are used as the input data of the prediction model at a certain time, and a user can select which time is to be used. In this case, the time may be determined by a certain physical model, or a certain time having a statistical correlation may be selected.

The plurality of times specified as the demand prediction target times are times with a predetermined time interval, and when it is clear that a demand prediction result at a time before the demand prediction time by the time interval for predicting the demands at the second time and subsequent times of these times, and a user inputs this with the input device 3, it is not necessary to perform the processing in step S4 and step S8 explained above with the demand prediction operation processing unit 5 at these times, thus improving the efficiency of calculation.

According to the embodiment, a demand prediction apparatus, a program, and a recording medium capable of appropriately predicting the demand in view of correlation between times can be provided.

The embodiment of the present invention has been hereinabove explained. However, this embodiment is presented as an example, and is not intended to limit the scope of the invention. Further embodiments can be embodied in various other forms, and various omissions, replacements, and changes can be made without deviating from the gist of the invention. The embodiment and the modifications thereof are included in the scope and the gist of the invention, and are included in the invention described in the claims and the scope equivalent thereto.

The method described in the above embodiment can be distributed as a computer-executable program stored in a storage medium such as a magnetic disk (floppy (registered trademark) disk, hard disk), an optical disk (such as a CD-ROM and a DVD), a magneto-optical disk (MO), and a semiconductor memory.

The storage format of the storage medium may be in any form as long as the program can be stored and can be read by a computer.

A portion of each processing for achieving the above embodiment may be executed with an OS (operating system) running on a computer, database management software, MW (middleware) such as network software, and the like, on the basis of instructions of programs installed on a computer from a storage medium.

Further, the storage medium according to the embodiment is not limited to a medium independent from the computer, and includes a storage medium storing a program transmitted via a LAN, the Internet, and the like, which are stored or temporarily stored through downloading.

The number of storage media is not limited to one. The storage medium according to the embodiment includes a case where the processing according to the embodiment is executed with a plurality of media, and the configuration of the medium may be in any configuration.

It should be noted that the computer according to the embodiment executes each processing according to the embodiment on the basis of the program stored in the storage medium, and may be in any configuration such as an apparatus including one personal computer, a system including a plurality of apparatuses connected to a network, and the like.

The computer according to the embodiment is not limited to a personal computer, but includes an arithmetic processing device, microcomputer, or the like included in an information processing apparatus, and collectively means apparatuses and devices that can achieve the functions of the embodiment based on a program.

## Claims

1. A demand prediction apparatus **characterized by** comprising:
an input device (3) configured to input input data for prediction of a demand at a demand prediction target time and a prediction result of a demand at a predetermined time before the demand prediction target time as the portion of the input data for prediction of the demand at the demand prediction target time when demands at a plurality of times in a day are predicted in prediction of time-series data of demand in the future; and
a demand prediction operation processing unit (5) configured to calculate a prediction value of the demand at the demand prediction target time using an input result given with the input device.

2. The demand prediction apparatus according to claim 1, **characterized in that** the input device inputs input data for prediction of demands at predetermined demand prediction target times with a predetermined time interval and a prediction value of a demand at a predetermined time before the demand prediction target time,
the demand prediction operation processing unit calculates prediction values of demands at the predetermined demand prediction target times with the predetermined time intervals using the input result given with the input device.

3. The demand prediction apparatus according to claim 1, **characterized by** further comprising a switch processing unit (7) configured to switch a demand prediction mode to either a prior prediction mode or a same-day correction mode,
wherein when the demand prediction mode is switched to the prior prediction mode by the switch processing unit, the input device inputs the input data for prediction of the demand at the demand prediction target time and the prediction value of the demand at the predetermined time before the demand prediction target time,
when the demand prediction mode is switched to the same-day correction mode by the switch processing unit, the input device inputs the input data for prediction of the demand at the demand prediction target time and a history value of a demand at a predetermined time before the demand prediction target time on the day to which the demand prediction target time belongs.

4. The demand prediction apparatus according to claim 3, **characterized in that** the prediction target demand is a demand of electric power, and the input data for prediction of the demand are weather prediction data,
when the demand prediction mode is switched to the same-day correction mode by the switch processing unit, the input device inputs the history value of the demand at the predetermined time before the demand prediction target time on the day to which the demand prediction target time belongs, and also inputs latest weather prediction data at the time.

5. The demand prediction apparatus according to claim 1, **characterized in that** the demand prediction operation processing unit uses the input result given with the input device to calculate the prediction value of the demand at the demand prediction target time by regression analysis.

6. The demand prediction apparatus according to claim 1, **characterized in that** the demand prediction operation processing unit uses the input result given with the input device to calculate the prediction value of the demand at the demand prediction target time by a neural network.

7. The demand prediction apparatus according to claim 1, **characterized in that** the demand prediction target time is an energy demand prediction target time,
the input data for prediction of the demand includes a weather prediction value at the energy demand prediction target time.

8. A computer-readable demand prediction program for causing a computer to function as:
an input device configured to input input data for prediction of a demand at a demand prediction target time and a prediction result of a demand at a predetermined time before the demand prediction target time as the portion of the input data for prediction of the demand at the demand prediction target time when demands at a plurality of times in a day are predicted in prediction of time-series data of demand in the future; and
a demand prediction operation processing unit configured to calculate a prediction value of the demand at the demand prediction target time using an input result given with the input device.

9. A computer-readable recording medium recorded with the program according to claim 8.
